# DEMANDE DE BREVET EUROPEEN

(11) **EP 4 686 410 A1**
(43) Date de publication de la demande: **04.02.2026**
(21) Numéro de dépôt: 25192426.2
(22) Date de dépôt: 29.07.2025
(51) Int. Cl.: A21C 15/00

(54) **PROCÉDÉ ET DISPOSITIF DE PRÉPARATION D'UN PRODUIT ALIMENTAIRE**

(30) Priorité: 30.07.2024 FR 2408440
(71) Demandeur: Or Equip, 13790 Peynier (FR)
(72) Inventeur: ASSIUS, Yannick, 13710 FUVEAU (FR)
(74) Mandataire: Marchand, André

(57) **Abrégé**

L'invention concerne un dispositif (1) de préparation d'un produit alimentaire, comprenant un châssis (10), un plateau (20) comprenant une face supérieure (20A) et une face inférieure (20B), la face supérieure comprenant des moyens (25, 26) de liaison réversible d'un support de garniture alimentaire, des moyens (40-1, 40-2) de rotation du plateau (20) relativement au châssis (10), autour d'un axe de rotation (AA'), et des moyens (45-1, 45-2) pour maintenir le plateau dans une première position stable dans laquelle la face supérieure (20A) du plateau est orientée vers le haut, ou dans une seconde position stable dans laquelle la face inférieure (20B) du plateau est orientée vers le haut. La face inférieure du plateau comprend des moyens pour réaliser une étape de traitement et/ou de finalisation du produit alimentaire.

## Description

### Domaine technique

La présente invention concerne un dispositif de préparation d'un produit alimentaire, comprenant un châssis, un plateau comprenant une face supérieure et une face inférieure, la face supérieure comprenant des moyens de liaison réversible avec le plateau d'un support de garniture alimentaire, des moyens de rotation du plateau autour d'un axe de rotation, et des moyens pour maintenir le plateau dans une première position stable dans laquelle la face supérieure du plateau est orientée vers le haut. La présente invention concerne également un procédé de préparation d'un produit alimentaire au moyen d'un tel dispositif.

### Arrière plan

La demanderesse a développé et décrit dans la demande WO 2020/012078 un support de garniture d'un produit alimentaire ainsi qu'un procédé et un dispositif de préparation d'un produit alimentaire permettant de simplifier et d'optimiser le processus de fabrication de produits alimentaires tels que des sandwichs.

Un tel dispositif de préparation de produit alimentaire comprend au moins un support de garniture alimentaire, et un plateau pivotant autour d'un axe horizontal. Le support de garniture alimentaire comprend des moyens de liaison réversible du support de garniture alimentaire avec le plateau, qui maintiennent le support de garniture alimentaire sur le plateau lorsque le plateau pivotant est incliné.

Le procédé de préparation d'un produit alimentaire utilisant un tel dispositif comprend des étapes consistant à disposer la garniture alimentaire sur le support de garniture alimentaire ; collecter des composés liquides ou semi-liquides s'écoulant de la garniture, par des moyens de collecte tels que des rainures intégrées au support de garniture alimentaire ; incliner le plateau et transférer la garniture alimentaire dans une préparation alimentaire, en inclinant suffisamment le support garni pour provoquer le glissement de la garniture dans la préparation alimentaire.

Le support de garniture alimentaire peut être fabriqué à partir de différents matériaux, comme le papier, le plastique ou tout autre matériau alimentaire compatible. Il est conçu pour être à la fois rigide et flexible afin de faciliter l'ajout des ingrédients et leur maintien en place. Une fois la garniture alimentaire disposée sur le support, celle-ci peut-être conservée au frais et distribuée sur des lieux de fabrication et de vente du produit alimentaire. Sur les lieux de fabrication et de vente, le plateau pivotant permet de transférer la garniture alimentaire entre des tranches de pain ou sur une autre base, en assurant une bonne cohésion et présentation du produit alimentaire final.

Ce procédé offre divers avantages. Il permet de réduire le temps nécessaire pour préparer des produits alimentaires en quantité, notamment des sandwichs. Le support de garniture assure une répartition homogène des ingrédients, améliorant ainsi la qualité et la consistance des produits finis. Le procédé peut être adapté à différents types de produits alimentaires au-delà des sandwichs, comme des wraps, des burgers, des salades, etc. Enfin, le dispositif offre une grande facilité d'utilisation. La conception du plateau pivotant et du dispositif vise à simplifier le processus pour les opérateurs, réduisant ainsi les erreurs humaines et augmentant l'efficacité tout en offrant une grande flexibilité d'utilisation.

Une fois le produit alimentaire réalisé, celui-ci peut faire l'objet d'une étape complémentaire de traitement et/ou de finalisation, comme l'ajout d'ingrédients, de sauce, sel, poivre ou autre épice, ou encore une étape d'ensachage.

Il pourrait donc être souhaité d'intégrer de telles étapes dans le procédé de préparation du produit alimentaire mis en œuvre au moyen d'un dispositif à plateau pivotant, afin de faciliter encore plus le travail de l'opérateur en charge de la préparation du produit alimentaire.

### Résumé

A cet effet, des modes de réalisations concernent un dispositif de préparation d'un produit alimentaire, comprenant un châssis, un plateau comprenant une face supérieure et une face inférieure, la face supérieure comprenant des moyens de liaison réversible avec le plateau d'un support de garniture alimentaire, des moyens de rotation du plateau autour d'un axe de rotation, et des moyens pour maintenir le plateau dans une première position stable dans laquelle la face supérieure du plateau est orientée vers le haut. Le dispositif comprend également des moyens pour faire pivoter le plateau depuis la première position stable jusqu'à une seconde position stable dans laquelle la face inférieure du plateau est orientée vers le haut, et la face inférieure du plateau comprend des moyens pour réaliser une étape de traitement et/ou de finalisation du produit alimentaire.

Selon un mode de réalisation, les moyens pour réaliser une étape de traitement et/ou de finalisation du produit alimentaire comprennent un support de produit alimentaire, le support de produit alimentaire étant agencé en surélévation relativement à la face inférieure du plateau.

Selon un mode de réalisation, le support de produit alimentaire comporte une extrémité reliée au plateau par des moyens de maintien, et une extrémité libre en porte-à-faux, l'extrémité libre permettant, lorsqu'un produit alimentaire est posé sur le support de produit alimentaire, de glisser un sac d'emballage à la fois autour du produit alimentaire et autour du support de produit alimentaire en passant par l'extrémité libre en porte-à-faux du support de produit alimentaire.

Selon un mode de réalisation, le dispositif comprend au moins une butée de rotation du plateau solidaire du châssis, la butée ayant une face supérieure venant en contact avec la face inférieure du plateau lorsque celui-ci est dans la première position stable, et une face inférieure venant en contact avec la face inférieure du plateau lorsque celui-ci est dans la seconde position stable.

Selon un mode de réalisation alternatif, le dispositif comprend au moins une butée de rotation du plateau solidaire du plateau, la butée ayant une face inférieure venant en contact avec une paroi du châssis lorsque le plateau est dans la première position stable, et une face supérieure venant en contact avec la paroi lorsque le plateau est dans la seconde position stable.

Selon un mode de réalisation, le plateau présente une première région comprise entre l'axe de rotation et un premier bord du plateau, et une seconde région comprise entre l'axe de rotation et un second bord du plateau, et la masse du plateau dans la première région est supérieure à la masse du plateau dans sa seconde région, pour conférer une stabilité aux première et seconde positions du plateau.

Selon un mode de réalisation, les moyens de rotation comprennent deux demi-axes solidaires du plateau et engagés dans des fentes ouvertes pratiquées dans deux parois du châssis, le dispositif étant dépourvu de moyen de verrouillage des demi-axes dans les fentes de telle sorte que le plateau peut être retiré du châssis en le soulevant de manière à l'éloigner du châssis.

Selon un mode de réalisation, les moyens de liaison réversible du support de garniture alimentaire avec le plateau comprennent au moins un organe mâle prévu pour coopérer avec au moins une cavité du support de garniture alimentaire.

Selon un mode de réalisation, les moyens de liaison réversible du support de garniture alimentaire avec le plateau comprennent deux languettes longitudinales solidaires de la face supérieure du plateau, situées à une distance l'une de l'autre de quelques centimètres et inclinées l'une relativement à l'autre selon des inclinaisons opposées.

Des modes de réalisation concernent également une combinaison d'un dispositif tel que précédemment décrit et d'un support de garniture alimentaire, dans laquelle le dispositif comprend deux organes mâles solidaires de la face supérieure du plateau, formant lesdits moyens de liaison réversible avec le plateau du support de garniture alimentaire, et le support de garniture alimentaire comprend une paroi de réception de la garniture alimentaire qui s'étend le long d'un premier plan, au moins deux parois de retenue de la garniture alimentaire inclinées par rapport au premier plan et bordant respectivement deux premiers bords opposés de la paroi de réception, au moins deux parois de renfort inclinées par rapport au premier plan et bordant respectivement les deux premiers seconds bords opposés de la paroi de réception, en regard des parois de retenue, et au moins quatre parois d'angle, chaque paroi d'angle reliant et prolongeant une paroi de retenue et une paroi de renfort, les parois de renfort formant avec les parois de retenue et les parois d'angle, deux logements de réception des organes mâles du dispositif.

Des modes de réalisation concernant également un procédé de préparation d'un produit alimentaire au moyen d'un dispositif tel que précédemment décrit, comprenant les étapes consistant à : le plateau étant dans la première position stable, disposer sur la face supérieure du plateau le support de garniture alimentaire sur lequel a été disposée une garniture alimentaire ; incliner le plateau suffisamment pour provoquer le glissement de la garniture alimentaire sur une préparation alimentaire, et ainsi former un produit alimentaire ; faire pivoter le plateau d'un demi-tour relativement à la première position stable, pour atteindre la seconde position stable ; poser le produit alimentaire sur le support de produit alimentaire, et réaliser une étape de traitement et/ou de finalisation du produit alimentaire pendant que celui-ci est posé sur le support de produit alimentaire.

Selon un mode de réalisation, le support de produit alimentaire est agencé en surélévation relativement à la face inférieure du plateau, comprend une extrémité reliée au plateau par des moyens de fixation et une extrémité libre en porte-à-faux, et l'étape de traitement et/ou de finalisation du produit alimentaire comprend une étape d'emballage du produit alimentaire au moyen d'un sac d'emballage qui est glissé à la fois autour du produit alimentaire et autour du support de produit alimentaire en passant par l'extrémité libre en porte-à-faux du support, suivie d'une étape consistant à retirer le produit alimentaire du support tout en le maintenant dans le sac d'emballage.

Selon un mode de réalisation, la préparation alimentaire est un morceau de pain et le produit alimentaire est un sandwich.

### Description sommaire des dessins

Des exemples de réalisation d'un dispositif et d'un procédé de préparation d'un produit alimentaire seront décrits dans ce qui suit à titre non limitatif, en relation avec les figures jointes parmi lesquelles :
- la figure 1 montre un mode de réalisation d'un dispositif de préparation de produit alimentaire, dans une première position stable,
- la figure 2 montre le dispositif de la figure 1 dans une seconde position stable,
- la figure 3A montre un exemple de support de garniture alimentaire et la figure 3B montre le support de garniture sur lequel a été disposée une garniture alimentaire,
- la figure 4 montre une étape d'un procédé de préparation d'un produit alimentaire au moyen du dispositif de la figure 1 et du support de garniture alimentaire de la figure 3B,
- la figure 5 montre une autre étape du procédé de préparation d'un produit alimentaire,
- la figure 6 montre une autre étape du procédé de préparation d'un produit alimentaire,
- la figure 7 montre une autre étape du procédé de préparation d'un produit alimentaire, et
- la figure 8 montre un autre mode de réalisation du dispositif de préparation d'une garniture alimentaire de la figure 1.

### Description détaillée

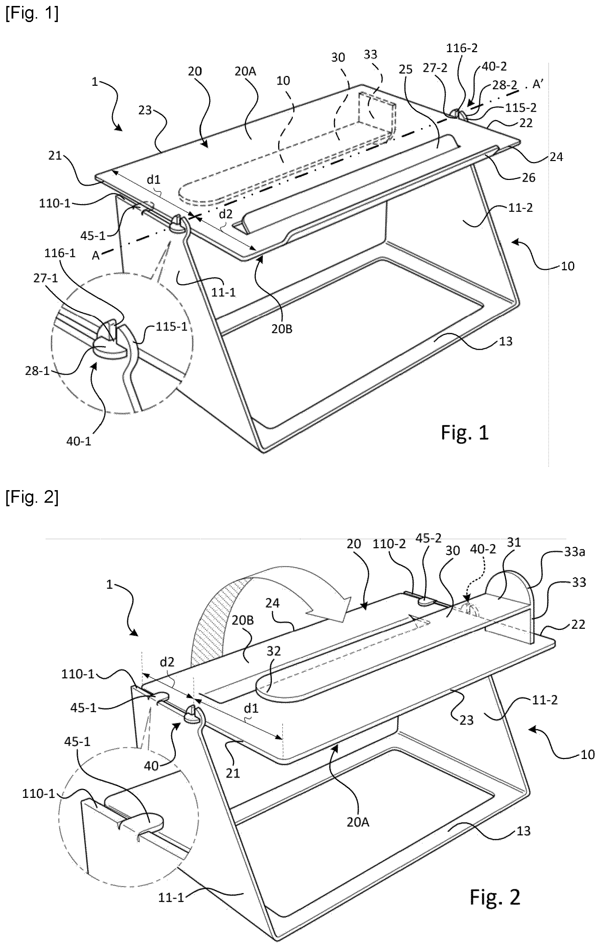

Les figures 1, 2, 4, 5 et 6 montrent un mode de réalisation d'un dispositif 1 de préparation de produit alimentaire. Le dispositif 1 comprend un châssis 10, un plateau 20 comprenant une face supérieure 20A et une face inférieure 20B, et des moyens 40-1, 40-2 de rotation du plateau 20 autour d'un axe de rotation AA'. Le châssis 10 comprend ici deux parois latérales 11-1, 11-2 agencées verticalement, et un socle 13 venant en appui sur une surface support (non représentée), le socle assurant la liaison des parois 11-1, 11-2. L'ensemble est par exemple en métal ou tout autre matériau approprié à une préparation alimentaire.

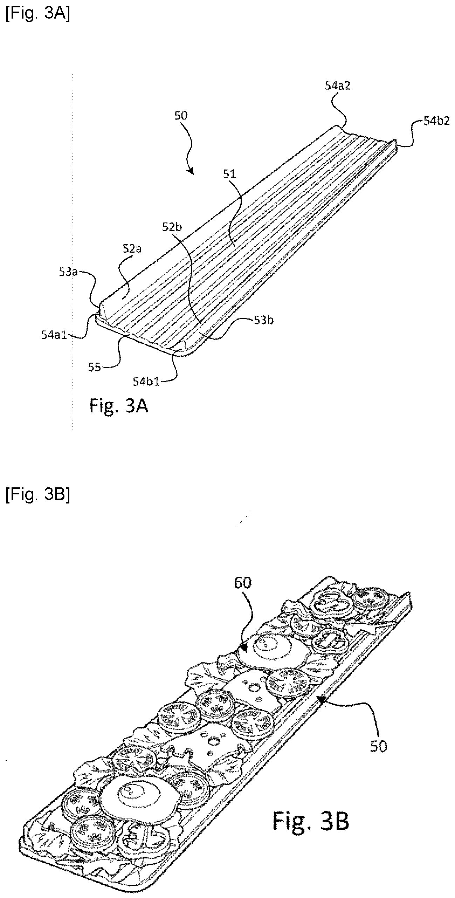

La face supérieure 20A du plateau 20 comprend des organes mâles 25, 26 de liaison réversible avec le plateau d'un support 50 de garniture alimentaire d'un type montré sur les figures 3A, 3B. Ces moyens de liaison réversibles comprennent ici, à titre d'exemple non limitatif, deux languettes longitudinales 25, 26 de faible hauteur, généralement de quelques centimètres de haut pour une vingtaine de centimètres de long, solidaires de la face supérieure du plateau 20A, et situées à une distance l'une de l'autre de quelques centimètres. Les languettes 25, 26 sont inclinées l'une relativement à l'autre selon des inclinaisons opposées, selon un agencement en « V » dont la base serait tronquée.

Les moyens de rotation du plateau 20 comprennent ici deux demi-axes 40-1, 40-2. Le demi-axe 40-1 (figure 1) coopère en rotation avec la paroi 11-1 du châssis, le second demi-axe 40-2 coopérant en rotation avec la paroi latérale 11-2. Comme montré sur la figure 1, le demi-axe 40-1 comprend ici une tige 27-1 insérée dans un logement 116-1 en forme de fente ouverte pratiqué dans la paroi 11-1. La tige 27-1 est ici une languette de forme plate qui s'étend dans le prolongement d'un bord gauche 21 du plateau 20 et est formée ici par usinage de celui-ci. La fente 116-1 est ici pratiquée dans une patte ou flasque 115-1 en saillie qui s'étend au-dessus d'une arête supérieure 110-1 de la paroi. Le flasque 115-1 est de la même épaisseur que la paroi 11-1 et est réalisé d'une pièce lors de l'usinage de la paroi. Le demi-axe 40-2 est identique au demi-axe 40-1 et comprend une tige 27-2 insérée dans un logement 116-2 en forme de fente ouverte pratiqué dans une patte 115-2 en saillie qui s'étend au-dessus d'une arête supérieure 110-2 de la paroi 11-2. La tige 27-2, comme la tige 27-1, est ici une languette qui s'étend dans le prolongement d'un bord droit 22 du plateau 20.

Afin d'éviter que les languettes 27-1, 27-2, qui s'étendent au-delà des fentes 116-1, 116-2 de part et d'autre des parois 11-1, 11-2, ne puissent blesser un opérateur, leurs extrémités sont ici pourvues d'un évasement 28-1, 28-2 à bord arrondi, par exemple en forme de demi-cercle.

Du fait de cet agencement, le plateau 20 sous l'effet de son propre poids est porté par les demi-axes 40-1, 40-2 qui se trouvent en appui sur les parois gauche 11-1 et droite 11-2 du châssis, dans une position où il s'étend sensiblement au-dessus des arêtes supérieures 110-1, 110-2 des parois 11-1, 11-2 et peut tourner autour de l'axe de rotation AA'. Le plateau peut être aisément retiré en le soulevant de manière à l'éloigner des parois 11-1, 11-2, ce qui a pour effet d'extraire les languettes 27-1, 27-2 des fentes 116-1, 116-2.

Le dispositif comporte ici deux butées 45-1, 45-2 de rotation du plateau agencées de part et d'autre de celui-ci. La butée 45-1 est une patte qui, comme le flasque 115-1, a été formée dans le prolongement de l'arête supérieure 110-1 de la paroi 11-1 du châssis, mais a ensuite été pliée à 90° pour occuper une position horizontale au lieu de verticale. De même, la butée 45-2 a été formée dans le prolongement de l'arête supérieure 110-2 de la paroi 11-2 du châssis, et a été pliée à 90° pour occuper une position horizontale.

Le plateau 20 présente une première région qui s'étend entre l' axe de rotation AA' et un premier bord transversal 23 du plateau parallèle à l' axe de rotation AA', et une seconde région qui s'étend entre l' axe de rotation AA' et un second bord transversal 24 parallèle à l' axe de rotation AA'. Dans un mode de réalisation, la première région est d'une masse supérieure à la masse de la seconde région. Cette différence de masse peut être obtenue par une différence dans l'étendue de chaque région relativement à l'axe de rotation AA' et/ou une différence d'épaisseur, ou tout autre moyen. Dans l'exemple représenté, le bord transversal 23 du plateau 20 qui délimite la première région se trouve à une distance d1 de l'axe de rotation AA' tandis que le bord transversal 24 se trouve à une distance d2 de l'axe de rotation AA', la distance d2 étant est inférieure à la distance d1. Pour un calcul précis de la différence de masse entre la première et la seconde région du plateau, il pourra également être tenu compte des organes que portent chaque région, comme cela sera vu plus loin. Les deux languettes 25, 26 de liaison réversible du support de garniture alimentaire sont agencées ici dans la seconde région du plateau. La languette 25 est formée par découpe du plateau selon un motif correspondant à la forme voulue de la languette, suivie d'une étape de pliage de la partie découpée pour former la languette. La languette 26 s'étend le long du bord 24 du plateau et est formée par usinage et pliage de ce bord 24.

En raison de l'agencement qui vient d'être décrit, le plateau 20 peut occuper deux positions stables. Dans une première position stable montrée sur la figure 1, la face supérieure 20A du plateau est orientée vers le haut. La face supérieure des butées 45-1, 45-2 est en contact avec la face inférieure 20B du plateau dans la première région de celui-ci. Sur la figure 2, on a fait tourner le plateau d'un demi-tour autour de l'axe de rotation AA'. Le plateau se trouve dans une seconde position stable dans laquelle sa face inférieure 20B se trouve orientée vers le haut. La face inférieure des butées 45-1, 45-2 est ici en contact avec la face inférieure 20B du plateau et la seconde position stable est assurée par effet de contrepoids, la seconde région du plateau d'étendue d1 formant ici contrepoids.

Selon un aspect de la présente divulgation, après qu'un produit alimentaire 62 a été préparé d'une manière qui sera rappelée plus loin, la face inférieure 20A du plateau est utilisée pour réaliser une étape de traitement et/ou de finalisation du produit alimentaire, et est pourvue à cet effet de moyens spécifiques. Dans l'exemple représenté, ces moyens spécifiques comprennent ou prennent la forme d'un support 30 prévu pour recevoir le produit alimentaire et faciliter son emballage, entre autres choses (notamment des opérations éventuelles de finalisation comme le fait de saler, poivrer, insérer une sauce dans le produit alimentaire, etc.). Le support 30 est de forme adaptée à la forme du produit alimentaire visé, et prend ici la forme d'une plaque support longitudinale offrant une surface plate permettant de poser un sandwich. La plaque support 30 est agencée dans la première région du plateau 20, parallèlement à la face inférieure 20B du plateau et en surélévation de quelques centimètres par rapport à cette dernière. Elle présente une extrémité proximale 31 qui est fixée au plateau 20 par une cloison verticale 33, et une extrémité distale 32 en porte-à-faux. La cloison 33 présente une partie 33a qui s'étend au-dessus de la plaque support 30, formant une butée pour le produit alimentaire.

La figure 3A montre un support 50 de garniture alimentaire du type décrit dans WO 2020/012078 et la figure 3B montre le support 50 sur lequel est disposé une garniture alimentaire 60. Le support 50 est réalisé en carton ou plastique, de préférence en une matière recyclable ou biosourcée, et comprend une paroi 51 de réception de la garniture 60, ou fond, qui s'étend le long d'un premier plan, présentant de préférence des rainures longitudinales pour évacuer des liquides ou semi-liquides. Le support 50 comporte également deux parois 52a, 52b de retenue de la garniture 60, inclinées par rapport au premier plan et bordant respectivement deux premiers bords opposés de la paroi de réception, ainsi que deux parois 53a, 53b de renfort inclinées par rapport au premier plan et bordant respectivement les deux premiers bords opposés de la paroi de réception, en regard des parois 52a, 52b de retenue. Le support 50 comporte également quatre parois d'angle 54a1, 54a2, 54b1, 54b2, chaque paroi d'angle reliant et prolongeant une paroi de retenue 52a, 52b et une paroi de renfort 53a, 53b. La partie inférieure du support 50 peut également comprendre une paroi de renfort périphérique 55 qui fait tout le tour du support 50 et lui confère une bonne rigidité.

Les parois de renfort 53a, 53b forment, avec les parois de retenue 52a, 52b et les parois d'angle 54a1, 54a2, 54b1, 54b2, deux logements de réception des languettes 25, 26 prévues sur la face supérieure 20A du plateau 20. L'ensemble constitue ici les moyens de liaison réversible avec le plateau 20 du support 50 de garniture alimentaire 60.

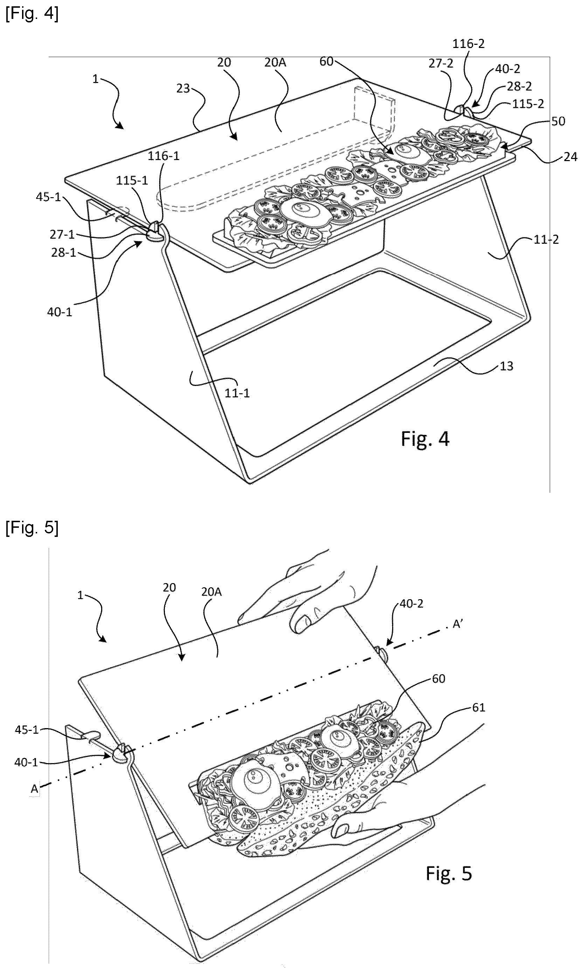

Les figures 4, 5, 6 et 7 montrent des étapes de préparation d'un produit alimentaire 62 conformément à un mode de réalisation du procédé objet de la présente divulgation.

A une étape montrée sur la figure 4, le plateau 20 est dans la première position stable, sa face supérieure 20A étant orientée vers le haut. Le support 50, sur lequel est disposée une garniture alimentaire 60, est agencé sur le plateau en introduisant les extrémités des languettes 25, 26 dans ses logements de réception.

A une étape montrée sur la figure 5, on incline le plateau 20 en le faisant pivoter autour de l'axe de rotation AA' jusqu'à faire glisser dans une préparation alimentaire 61, ici un morceau de pain fendu dans sa longueur, la garniture alimentaire 60 présente sur le support 50 de garniture alimentaire.

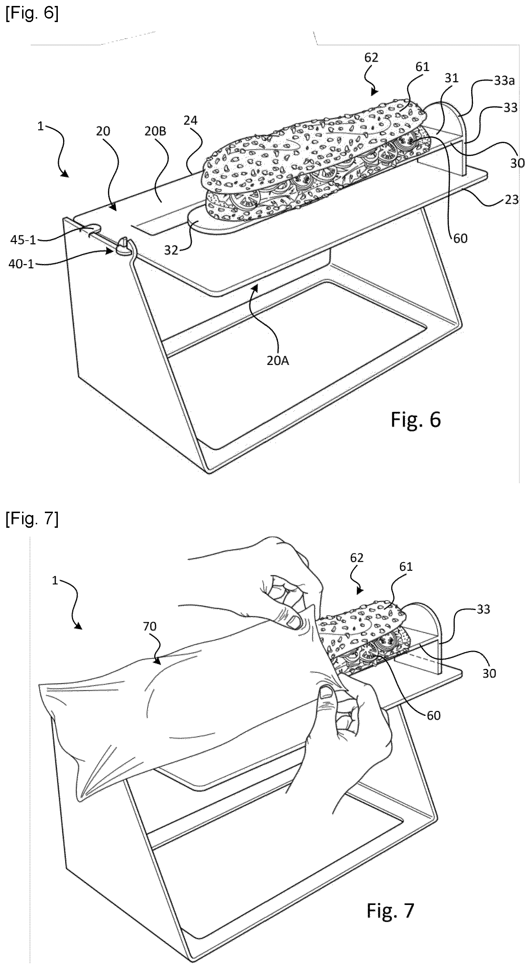

A une étape illustrée sur la figure 6, on a fait pivoter le plateau 20 d'un demi-tour et celui-ci se trouve dans la seconde position stable, sa face inférieure 20B étant orientée vers le haut. Entre l'étape de la figure 5 et celle de la figure 6, le support 50 de la garniture alimentaire 60 a pu être retiré de la face supérieure 20A du plateau, ou bien s'être détaché tout seul du plateau lors du retournement de celui-ci. Le produit alimentaire 62, ici un sandwich, est posée sur la plaque support 30, et peut faire l'objet d'étapes de finalisation optionnelles, si nécessaire.

A une étape montrée sur la figure 7, on fait glisser un sac d'emballage 70 à la fois autour du produit alimentaire 62 et autour de la plaque support 30 en passant par son extrémité libre 32 en porte-à-faux. Le produit alimentaire peut ensuite être retiré de la plaque support tout en le laissant dans le sac 70.

Il apparaîtra clairement à l'homme de l'art que le dispositif selon l'invention est susceptible de diverses variantes et autres modes de réalisation. Le support 30 du produit alimentaire 62 prévu sur la face inférieure 20B du plateau 20 peut prendre diverses formes appropriées aux étapes visées de traitement ou de finalisation du produit alimentaire, ou diverses formes appropriées à celle du produit alimentaire. Par exemple, le support 30 peut prendre la forme d'une plaque pourvue d'un orifice pour recevoir un récipient en carton ou plastique devant être ensaché, dans lequel on verse la garniture alimentaire au cours de l'étape illustrée sur la figure 5.

Par ailleurs, tout autre type de fixation du support de garniture sur la face supérieure du plateau peut être prévue, par exemple une fixation utilisant des aimants intégrés dans le plateau et un support de garniture métallique maintenu par aimantation sur le plateau. De même, les deux languettes longitudinales 25, 26 pourraient être réalisées sur un support indépendant fixé magnétiquement au plateau rotatif 20.

Le mode de réalisation qui a été décrit dans ce qui précède présente l'avantage de ne comprendre aucun assemblage de pièces au moyen de vis, et ne comprend que deux pièces constitutives, à savoir le plateau 20 et le châssis 10. Le retrait du plateau 20 du châssis 10 ne nécessite aucun démontage et permet un nettoyage rapide du plateau, et son remontage immédiat par la simple insertion des languettes 27-1, 27-2 dans les fentes 116-1, 116-2.

Pour la répartition des masses du plateau de part et d'autre de l'axe de rotation AA', conférant la stabilité du plateau 20 dans les deux positions stables susmentionnées, il pourra être tenu compte du poids du support 30 de produit alimentaire 62, ainsi que du poids du support 50 de préparation alimentaire lorsque celui-ci est garni.

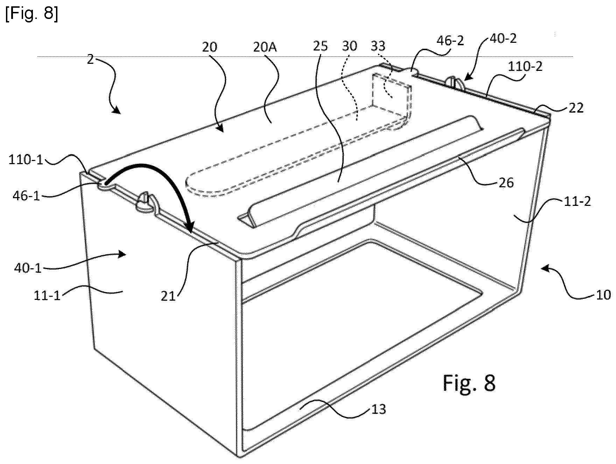

La figure 8 montre un mode de réalisation 2 du dispositif dans lequel le plateau 20 comporte deux butées de rotation 46-1, 46-2 solidaires du plateau 20. La butée 46-1 est une patte ou ergot s'étendant en saillie horizontale sur le bord gauche 21 du plateau. La butée 46-2 est une patte ou ergot s'étendant en saillie horizontale sur le bord droit 22 du plateau. Lorsque le plateau est dans la première position stable, face supérieure 20A vers le haut, la face inférieure de la butée 46-1 est en contact avec l'arête 110-1 de la paroi gauche 11-1 du châssis, tandis que la face inférieure de la butée 46-2 est en contact avec l'arête 110-2 de la paroi droite 11-2 du châssis. Lorsque le plateau a été retourné comme montré par une flèche et amené dans la seconde position stable, sa face supérieure 20A étant orientée vers le bas, la face supérieure de la butée 46-1 est en contact avec l'arête 110-1 de la paroi gauche 11-1 du châssis et la face supérieure de la butée 46-2 est en contact avec l'arête 110-2 de la paroi droite 11-2 du châssis.

## Revendications

1. Dispositif (1, 2) de préparation d'un produit alimentaire (62), comprenant :
- un châssis (10, 11-1, 11-2, 13),
- un plateau (20) comprenant une face supérieure (20A) et une face inférieure (20B), la face supérieure (20A) comprenant des moyens (25, 26) de liaison réversible avec le plateau (20) d'un support (50) de garniture alimentaire (60),
- des moyens (40-1, 40-2) de rotation du plateau autour d'un axe de rotation (AA'), et
- des moyens (45-1, 45-2, 46-1, 46-2) pour maintenir le plateau dans une première position stable dans laquelle la face supérieure (20A) du plateau est orientée vers le haut,
dispositif **caractérisé en ce qu'**il comprend des moyens (40-1, 40-2, 45-1, 45-2, 46-1, 46-2) pour faire pivoter le plateau depuis la première position stable jusqu'à une seconde position stable dans laquelle la face inférieure (20B) du plateau est orientée vers le haut, et **en ce que** la face inférieure (20B) du plateau comprend des moyens (30) pour réaliser une étape de traitement et/ou de finalisation du produit alimentaire (62).

2. Dispositif selon la revendication 1, dans lequel les moyens pour réaliser une étape de traitement et/ou de finalisation du produit alimentaire (62) comprennent un support (30) de produit alimentaire (62), le support (30) de produit alimentaire (62) étant agencé en surélévation relativement à la face inférieure (20B) du plateau.

3. Dispositif selon la revendication 2, dans lequel le support (30) de produit alimentaire (62) comporte une extrémité (31) reliée au plateau (20) par des moyens de maintien (33), et une extrémité libre (32) en porte-à-faux, l'extrémité libre permettant, lorsqu'un produit alimentaire (62) est posé sur le support de produit alimentaire, de glisser un sac d'emballage (70) à la fois autour du produit alimentaire (62) et autour du support (30) de produit alimentaire (62) en passant par l'extrémité libre (32) en porte-à-faux du support de produit alimentaire.

4. Dispositif (1) selon l'une des revendications 1 à 3, dans lequel les moyens pour faire pivoter le plateau depuis la première position stable jusqu'à une seconde position stable comprennent au moins une butée (45-1, 45-2) de rotation du plateau solidaire du châssis (10, 11-1, 11-2), la butée ayant une face supérieure venant en contact avec la face inférieure (20B) du plateau lorsque celui-ci est dans la première position stable, et une face inférieure venant en contact avec la face inférieure (20B) du plateau lorsque celui-ci est dans la seconde position stable.

5. Dispositif (2) selon l'une des revendications 1 à 3, dans lequel les moyens pour faire pivoter le plateau depuis la première position stable jusqu'à une seconde position stable comprennent au moins une butée (46-1, 46-2) de rotation du plateau solidaire du plateau, la butée (46-1, 46-2) ayant une face inférieure venant en contact avec une paroi (11-1, 110-1, 11-2, 110-2) du châssis (10) lorsque le plateau est dans la première position stable, et une face supérieure venant en contact avec la paroi (11-1, 11-2) lorsque le plateau est dans la seconde position stable.

6. Dispositif selon l'une des revendications 1 à 5, dans lequel :
- le plateau présente une première région comprise entre l'axe de rotation (AA') et un premier bord (23) du plateau, et une seconde région comprise entre l'axe de rotation (AA') et un second bord (24) du plateau, et
- la masse du plateau dans la première région est supérieure à la masse du plateau dans sa seconde région, pour conférer une stabilité aux première et seconde positions du plateau.

7. Dispositif selon l'une des revendications 1 à 6, dans lequel les moyens de rotation (40-1, 40-2) comprennent deux demi-axes (27-1, 27-2) solidaires du plateau (20) et engagés dans des fentes ouvertes (116-1, 116-2) pratiquées dans deux parois (11-1, 11-2) du châssis, le dispositif étant dépourvu de moyen de verrouillage des demi-axes (27-1, 27-2) dans les fentes (116-1, 116-2) de telle sorte que le plateau peut être retiré du châssis en le soulevant de manière à l'éloigner du châssis.

8. Dispositif selon l'une des revendications 1 à 7, dans lequel les moyens de liaison réversible du support (50) de garniture alimentaire (60) avec le plateau (20) comprennent au moins un organe mâle (25, 26) prévu pour coopérer avec au moins une cavité du support de garniture alimentaire.

9. Dispositif selon la revendication 8, dans lequel les moyens de liaison réversible du support (50) de garniture alimentaire (60) avec le plateau comprennent deux languettes longitudinales (25, 26) solidaires de la face supérieure du plateau (20A), situées à une distance l'une de l'autre de quelques centimètres et inclinées l'une relativement à l'autre selon des inclinaisons opposées.

10. Combinaison d'un dispositif selon l'une des revendications 1 à 9 et d'un support (50) de garniture alimentaire (60), dans laquelle :
- le dispositif comprend deux organes mâles (25, 26) solidaires de la face supérieure (20A) du plateau (20), formant lesdits moyens de liaison réversible avec le plateau du support (50) de garniture alimentaire (60), et
- le support (50) de garniture alimentaire (60) comprend une paroi (51) de réception de la garniture alimentaire qui s'étend le long d'un premier plan, au moins deux parois (52a, 52b) de retenue de la garniture alimentaire inclinées par rapport au premier plan et bordant respectivement deux premiers bords opposés de la paroi de réception, au moins deux parois (53a, 53b) de renfort inclinées par rapport au premier plan et bordant respectivement les deux premiers seconds bords opposés de la paroi de réception, en regard des parois (52a, 52b) de retenue, et au moins quatre parois d'angle (54a1, 54a2, 54b1, 54b2), chaque paroi d'angle reliant et prolongeant une paroi de retenue et une paroi de renfort, les parois de renfort formant avec les parois de retenue et les parois d'angle, deux logements de réception des organes mâles (25, 26) du dispositif.

11. Procédé de préparation d'un produit alimentaire (62) au moyen d'un dispositif selon l'une des revendications 1 à 9, comprenant les étapes consistant à :
- le plateau (20) étant dans la première position stable, disposer sur la face supérieure (20A) du plateau le support (50) de garniture alimentaire (60) sur lequel a été disposée une garniture alimentaire (60),
- incliner le plateau suffisamment pour provoquer le glissement de la garniture alimentaire (60) sur une préparation alimentaire (61), et ainsi former un produit alimentaire (62),
- faire pivoter le plateau (20) d'un demi-tour relativement à la première position stable, pour atteindre la seconde position stable,
- poser le produit alimentaire (62) sur le support (30) de produit alimentaire (62), et
- réaliser une étape de traitement et/ou de finalisation du produit alimentaire (62) pendant que celui-ci est posé sur le support (30) de produit alimentaire (62).

12. Procédé selon la revendication 11, dans lequel le support (30) de produit alimentaire (62) est agencé en surélévation relativement à la face inférieure (20B) du plateau, comprend une extrémité (31) reliée au plateau (20) par des moyens (33) de fixation et une extrémité libre (32) en porte-à-faux, et dans lequel l'étape de traitement et/ou de finalisation du produit alimentaire comprend une étape d'emballage du produit alimentaire (62) au moyen d'un sac d'emballage (70) qui est glissé à la fois autour du produit alimentaire (62) et autour du support (30) de produit alimentaire (62) en passant par l'extrémité libre (32) en porte-à-faux du support, suivie d'une étape consistant à retirer le produit alimentaire du support tout en le maintenant dans le sac d'emballage.

13. Procédé selon l'une des revendications 11 et 12, dans lequel la préparation alimentaire (61) est un morceau de pain et le produit alimentaire (62) est un sandwich.
